# EUROPÄISCHE PATENTSCHRIFT

(11) **EP 3 011 143 B1**
(45) Veröffentlichungstag und Bekanntmachung des Hinweises auf die Patenterteilung: **27.09.2017**
(21) Anmeldenummer: 14758817.2
(22) Anmeldetag: 21.08.2014
(51) Int. Cl.: F01D 25/28, F01D 25/24, B23P 6/00

(54) **DREHVORRICHTUNG FÜR EINE GASTURBINE UND VERFAHREN ZUM DREHEN EINES BAUTEILS**
ROTATION DEVICE FOR A GAS TURBINE AND PROCESSES FOR ROTATING AN ELEMENT
DISPOSITIF DE ROTATION POUR UNE TURBINE À GAZ ET PROCÉDÉS POUR FAIRE TOURNER UN COMPOSANT

(30) Priorität: 19.09.2013 EP 13185127
(43) Veröffentlichungstag der Anmeldung: 27.04.2016
(73) Patentinhaber: Siemens Aktiengesellschaft, 80333 München (DE)
(72) Erfinder: HÜLFENHAUS, Armin, 40764 Langenfeld (DE); LI, Gang Yi, Shanghai, 200240 Shanghai (CN)
(86) Internationale Anmeldenummer: PCT/EP2014/067828
(87) Internationale Veröffentlichungsnummer: WO 2015/039830

(56) Entgegenhaltungen:
- WO-A1-2008/012195

## Beschreibung

Die Erfindung betrifft eine Drehvorrichtung für eine wenigstens teilweise geöffnete Gasturbine sowie ein Verfahren zum Drehen eines Bauteils einer derartig teilweise geöffneten Gasturbine.

Um Wartungsarbeiten bzw. Reparaturen an Bauteilen eines Verdichters bzw. einer Turbine einer Gasturbine vornehmen zu können, ist es oftmals erforderlich, die Gasturbine wenigstens teilweise zu öffnen, um so an die handzuhabenden Bauteile zu gelangen. Hierzu werden insbesondere Gehäuseteile bzw. Teile des Leitapparats entfernt, um so die Bauteile zugänglich zu machen. Je nach Reparatur bzw. Wartung kann es auch erforderlich sein, den von einem bereits teilweise geöffneten Gehäuse bzw. Leitapparat umgebenen Gasturbinenläufer zu entfernen. Dadurch werden beispielsweise die unter dem Gasturbinenläufer liegenden Teile des Leitapparats bzw. des Gehäuses zugänglich.

Das teilweise Öffnen einer Gasturbine stellt sich als technisch sehr anspruchsvoll dar und ist für den Betreiber der Gasturbine mit einem hohen Kostenaufwand verbunden. Um die dabei auftretenden Wartungszeiten bzw. Reparaturzeiten in einem wirtschaftlich sinnvollen zeitlichen Rahmen zu halten, gibt es bereits aus dem Stand der Technik Vorschläge, wie das Entfernen von Teilen des Leitapparats bzw. des Gasturbinenläufers ausgeführt werden kann. So schlägt beispielsweise die WO 2006/103152 A1 vor, die die Merkmale des Oberbegriffs des unabhängigen Vorrichtungsanspruchs 1 offenbart, bei einer bereits teilweise geöffneten Gasturbine zwischen dem Unterteil des Leitapparats und dem Unterteil des Gehäuses feststehende Rollen zu platzieren, um so in einer Schwenkbewegung beide Bauteile gegeneinander drehen zu können. Alternativ schlägt die gleiche Schrift vor, zwischen dem Gasturbinenläufer und dem Unterteil des Leitapparats feststehende Abstands- und Fixiermittel vorzusehen, so dass auch bei einem Verschwenken von Gasturbinenläufer mit Unterteil des Leitapparats diese stets in einem festen Abstand zueinander gehalten werden können. Bei beiden Ausführungsformen wird die Kraft zum Drehen der jeweiligen Bauteile durch einen Mobilkran oder auch einen Maschinenhauskran erreicht.

Aus dem Stand der Technik sind zudem noch weitere Vorrichtungen bekannt, welche ein Verschwenken des Leitapparats einer geöffneten Gasturbine ermöglichen, ohne hierbei den Gasturbinenläufer mit zu bewegen. Hierzu sind etwa die WO 2008/012195 A1 und die EP 1 052 377 A2 zu nennen. Ebenso sind Vorrichtungen bekannt, welche erlauben, einzelne Bauteile eines Gasturbinenläufers bei geöffneter Gasturbine auszutauschen. Hierzu sind etwa die US 2010/0083499 A1 und die EP 2 169 184 A2 zu nennen.

Nun kann es jedoch erforderlich sein, lediglich den Gasturbinenläufer einer geöffneten Gasturbine zu verschwenken, wobei jedoch der Leitapprat weitgehend unverändert in dem Unterteil des Gehäuses verbleiben soll. Dies ist etwa bei einer optischen Inspektion der einzelnen Laufschaufeln des Gasturbinenläufers erforderlich. Der Stand der Technik kann hierzu keine Vorschläge machen, wie ein präzises und kontrolliertes Verschwenken erreicht werden könnte, ohne etwa die Gasturbine noch weiter zu zerlegen bzw. auseinanderzubauen.

Insofern stellt es sich als technisch erforderlich dar, eine Lösung vorzuschlagen, die die im Stand der Technik auftretenden Nachteile vermeiden kann. Insbesondere soll die vorzuschlagende Lösung in der Lage sein, eine Drehung eines Gasturbinenläufers einer wenigstens teilweise geöffneten Gasturbine unter geringem technischem und zeitlichem Aufwand präzise und kontrolliert zu erreichen.

Diese der Erfindung zugrundeliegenden Aufgaben werden gelöst durch eine Drehvorrichtung gemäß Anspruch 1 sowie durch Verfahren zum Drehen eines Gasturbinenläufers einer wenigstens teilweise geöffneten Gasturbine mittels einer solchen Drehvorrichtung gemäß Anspruch 11.

Insbesondere werden diese der Erfindung zugrundeliegenden Aufgabe, gelöst durch eine Drehvorrichtung für eine wenigstens teilweise geöffnete Gasturbine, welche dazu ausgebildet ist, auf einer Teilfuge des Gehäuses der wenigstens teilweise geöffneten Gasturbine über wenigstens einen Verbindungsabschnitt angebracht zu werden, wobei die Drehvorrichtung wenigstens einen ersten Befestigungsabschnitt aufweist, der dazu ausgebildet ist, mit einem Kraftübertragungsmittel, insbesondere wenigstens einem Seilzug mechanisch zusammenzuwirken, um eine drehende Bewegung mindestens eines Bauteils der wenigstens teilweise geöffneten Gasturbine mechanisch zu vermitteln, wobei mindestens eine Manschette (50) umfasst ist, die wenigstens einen zweiten Befestigungsabschnitt (51) aufweist, wobei die Manschette (50) dazu ausgebildet ist, kraftschlüssig mit dem Gasturbinenläufer (15) verbunden zu werden.

Weiterhin werden die der Erfindung zugrundeliegenden Aufgaben gelöst, durch ein Verfahren zum Drehen eines Bauteils einer wenigstens teilweise geöffneten Gasturbine mittels einer vorab wie auch nachfolgend beschriebenen Drehvorrichtung, wobei die folgenden Schritte umfasst sind:
- Anbringen wenigstens eines Verbindungsabschnitts der Drehvorrichtung auf einer Teilfuge des Gehäuses der Gasturbine;
- Kraftschlüssiges Verbinden einer Manschette mit dem Gasturbinenläufer der Gasturbine;
- Befestigen eines Kraftübertragungsmittels, insbesondere wenigstens eines Seilzugs an dem wenigstens einen zweiten Befestigungsabschnitt der Manschette;
- Befestigung des Kraftübertragungsmittels an dem wenigstens einen Befestigungsabschnitt;
- Beaufschlagen des Kraftübertragungsmittels mit einer Kraft zum Drehen des Gasturbinenläufers.

Die erfindungsgemäße Drehvorrichtung kann folglich über einen Verbindungsabschnitt an einer Teilfuge des teilweise geöffneten Gehäuses der Gasturbine angebracht werden. Typischerweise weist das Gehäuse eine obere Gehäusehälfte sowie eine untere Gehäusehälfte auf. Andere Unterteilungen des Gehäuses sind jedoch möglich. Die Öffnung der Gasturbine erfolgt folglich im Normalfall durch Trennung der verschiedenen Gehäuseteile voneinander, insbesondere durch Abnehmen einer oberen Gehäusehälfte von der unteren. Die Gehäuseteile sind hierbei miteinander über Teilfugen kontaktiert, wobei die Teilfugen im Normalfall geeignete Schraubengänge aufweisen, so dass die Gehäuseteile zur Verbindung miteinander fest verschraubt werden können.

Die Teilfugen dienen erfindungsgemäß zur Anbringung des wenigstens einen Verbindungsabschnitts der Drehvorrichtung, so dass die Drehvorrichtung nach Öffnung der Gasturbine, d.h. etwa nach Abnahme eines Gehäuseteils, mit diesen Teilfugen beispielsweise durch Verschraubung verbunden werden kann. Demnach ist die Drehvorrichtung zumindest bereichsweise fest mit einem oder mehreren Gehäuseteil/en der Gasturbine verbunden. Zur Vermittlung einer mechanischen Drehbewegung eines Bauteils der Gasturbine kann nun ein Kraftübertragungsmittel mit der Drehvorrichtung über wenigstens einen ersten Befestigungsabschnitt zusammenwirken. Typischerweise dient der erste Befestigungsabschnitt der Drehvorrichtung zur Kraftabstützung bzw. Kraftumleitung, so dass bei Beaufschlagung des Kraftübertragungsmittels mit einer Kraft, diese auf ein zu bewegendes Bauteil der Gasturbine übertragen werden kann. Hierzu ist typischerweise das Kraftübertragungsmittel auch mit dem betreffenden Bauteil der Gasturbine geeignet verbunden. Bei Einleitung einer Kraft in das Kraftübertragungsmittel können nun durch die Drehvorrichtung die Stütz- bzw. Umlenkkräfte in das geöffnete Gehäuse der Gasturbine eingeleitet werden, wobei gleichzeitig eine gezielte Drehbewegung des Bauteils der Gasturbine erreicht werden kann.

Da die Verbindung der Drehvorrichtung mit dem Gehäuse der Gasturbine ausreichend fest ist, reichen bereits gängige Kraftbeaufschlagungsmittel, bspw. ein Windenmotor mit angebrachter Winde, um die erforderlichen Kräfte für die Drehbewegung in das Kraftübertragungsmittel einzuleiten. Das Vorsehen eines Mobilkrans, wie es aus dem Stand der Technik bekannt ist, kann somit vermieden werden. Vielmehr kann die Drehvorrichtung verhältnismäßig kostengünstig hergestellt und leicht bevorratet werden. Bei Bedarf kann dann die Drehvorrichtung mit dem wenigstens teilweise geöffneten Gehäuse der Gasturbine verbunden werden, ohne hierbei weitere Betriebskosten für teure Vorrichtungen zu generieren.

Gemäß der Erfindung ist fernerhin vorgesehen, dass mindestens eine Manschette umfasst ist, die wenigstens einen zweiten Befestigungsabschnitt aufweist, wobei die Manschette dazu ausgebildet ist, kraftschlüssig mit dem Gasturbinenläufer verbunden zu werden. Die Manschette erlaubt somit die Krafteinleitung zur Beaufschlagung des Gasturbinenläufers mit einer Drehbewegung, ohne hierbei den Gasturbinenläufer selbst mit Befestigungsabschnitten versehen zu müssen. Die Manschette hat insbesondere zwei Aufnahmeabschnitte, welche an die Querschnittsumfangsform des Gasturbinenläufers angepasst sind, so dass bei geeigneter Anbringung an den Gasturbinenläufer eine kraftschlüssige Verbindung erreicht werden kann. Durch eine Kraftbeaufschlagung des wenigstens einen zweiten Befestigungsabschnitts an der Manschette kann so über die Manschette vermittelt der Gasturbinenläufer mit einer Drehbewegung beaufschlagt werden, die sowohl einerseits präzise als auch andererseits kontrolliert erfolgen kann.

Entsprechend der erfindungsgemäßen Drehvorrichtung bzw. Verfahren kann das Kraftübertragungsmittel zur Drehung des Gasturbinenläufers vorgesehen werden. Ist zur Drehung des Gasturbinenläufers ein weiteres Bauteil, eine Manschette, erforderlich, über welche das Kraftübertragungsmittel mit dem Gasturbinenläufer zur Beaufschlagung einer Drehbewegung zusammenwirken kann, so wäre bei der Bewirkung einer Drehbewegung eines Teils des Leitapparates nicht unbedingt ein weiteres Bauteil erforderlich, soweit der Gasturbinenläufer nicht verschwenkt werden sollte. Hierbei weist die Manschette wenigstens einen zweiten Befestigungsabschnitt auf, über welchen das Kraftübertragungsmittel mit der Drehvorrichtung zusammenwirken kann.

Gemäß einer ersten besonders bevorzugten Ausführungsform der Erfindung ist vorgesehen, dass die Drehvorrichtung bei erfolgter Anbringung an dem Gehäuse einen Gasturbinenläufer der wenigstens teilweise geöffneten Gasturbine teilweise umgibt. Der Gasturbinenläufer kann hierbei, wie auch in allen anderen Ausführungsformen, als Rotor mit einer Anzahl an Laufschaufeln bzw. einer Anzahl an Laufschaufelreihen ausgebildet sein. Durch das teilweise Umgeben des Gasturbinenläufers durch die Drehvorrichtung ist eine vorteilhafte mechanische Wechselwirkung zwischen Drehvorrichtung und dem Gasturbinenläufer bzw. Teilen des Leitapparates möglich, so dass eine Drehung leicht vermittelt werden kann. Besonders bevorzugt weist die Drehvorrichtung eine vorbestimmte Drehachse auf, welche bei erfolgter Anbringung an dem Gehäuse der Gasturbine mit der Drehachse des Gasturbinenläufers zusammenfällt. Insofern kann unwuchtarm bzw. unwuchtfrei eine Drehbewegung auf den Gasturbinenläufer übertragen werden.

Gemäß einer weiteren besonders bevorzugten Ausführungsform der Erfindung ist vorgesehen, dass weiter wenigstens ein Adapterstück von der Drehvorrichtung umfasst ist, welches sowohl mit dem wenigstens einen Verbindungsabschnitt mechanisch verbunden ist, als auch mit der Teilfuge des Gehäuses der Gasturbine verbindbar ist. Das Adapterstück kann bspw. unterschiedlichen Anforderungen an Anbringung bzw. Befestigung an der Teilfuge des Gehäuses durch unterschiedliche Geometrieen Rechnung tragen. Ebenso können verschiedene Adapterstücke bei Anbringung auch unterschiedliche Längen aufweisen zwischen der Teilfuge und dem Verbindungsabschnitt der Drehvorrichtung. Somit kann eine Anpassung der Drehvorrichtung an verschiedene Gasturbinen komplikationslos ermöglicht werden.

Insbesondere kann die Anbringung der Drehvorrichtung an unterschiedlichen Gehäusen verschiedener Gasturbinen erreicht werden, wie auch weiterhin eine mittige Ausrichtung in Bezug auf die Drehachse des Gasturbinenläufers.

Gemäß einer weiteren vorteilhaften Ausführungsform der Erfindung ist vorgesehen, dass der wenigstens eine erste Befestigungsabschnitt dazu ausgebildet ist, einen Seilzug zu haltern, und insbesondere ein Auge, bevorzugt ein bewegliches Auge aufweist. Ganz besonders bevorzugt ist das Auge als Öse oder als Schäkel ausgebildet. Der erste Befestigungsabschnitt erlaubt somit die geeignete Führung und Halterung eines als Seilzug ausgebildeten Kraftübertragungsmittels, so dass eine geeignete Kraftum- und -einleitung von der Drehvorrichtung in den Seilzug erreicht werden kann. Ist das Auge beweglich ausgeführt, kann eine vorteilhafte und flexible Bedienung der Drehvorrichtung sowie eine schnelle und komplikationslose Verbindung von erstem Befestigungsabschnitt und Seilzug erreicht werden.

Gemäß einer Weiterbildung der Erfindung ist vorgesehen, dass der wenigstens eine zweite Befestigungsabschnitt dazu ausgebildet ist, einen Seilzug zu haltern und insbesondere ein Auge, bevorzugt ein bewegliches Auge aufweist. Bevorzugt ist das Auge wiederum als Öse bzw. als Schäkel ausgebildet. Durch die geeignete Halterung bzw. Führung des Seilzugs über den zweiten Befestigungsabschnitt ist wiederum eine geeignete Kraftumleitung bzw. Kraftbeaufschlagung des zu drehenden Bauteils mittels des Seilzugs möglich. Besonders bei einer Ausführung des wenigstens einen zweiten Befestigungsabschnittes als bewegliches Auge kann eine flexible und leichte Verbindung zwischen Seilzug und zweitem Befestigungsabschnitt herbeigeführt werden.

Gemäß einer weiteren nachfolgenden Ausführungsform, welche sich diesen Aspekt zunutze macht, kann vorgesehen sein, dass die mindestens eine Manschette wenigstens teilweise eine Umfangsform aufweist, welche der Umfangsform eines Leitapparates nachgebildet ist. Der Leitapparat wird, wie oben bereits ausgeführt, hierbei typischerweise von dem Gehäuse der Gasturbine umschlossen und umgibt selbst den Gasturbinenläufer. Der Leitapparat dient in erster Linie der Strömungsführung der fluiddynamisch aktiven Bereiche der Gasturbine und umfasst insbesondere die Leitschaufeln, bzw. einzelne Reihen von Leitschaufeln. Durch die bereichsweise Nachbildung der Umfangsform des Leitapparates kann die Manschette bei erfolgender Drehung sich in geeigneter Weise gegen die Innenwand der mit der Drehvorrichtung verbundenen Gehäuseteile abstützen, so dass die Drehbewegung unter unveränderlicher Beabstandung zwischen äußerer Umfangsform der Manschette und den inneren Wandungen der Gehäuseteile erfolgen kann. Damit ist eine kontrollierte Drehung ohne übermäßige Kraftaufwendung zum Ausgleichen von ungewünschten Unwuchten möglich. Die Umfangsform der Manschette folgt jedoch der Umfangsform des Leitapparates nur in denjenigen Bereichen, welche aus den Gehäuseteilen herausgedreht werden können. Nach erfolgter Herausdrehung kann so die Manschette die Funktion der herausgedrehten Teile des Leitapparates hinsichtlich der Kraftabstützung gegen die Gehäuseteile übernehmen.

Entsprechend einer weiteren besonders bevorzugten Ausführungsform der erfindungsgemäßen Drehvorrichtung ist vorgesehen, dass die Drehvorrichtung eine im Wesentlichen U-förmige Geometrie aufweist, deren Endstücke jeweils einen Verbindungsabschnitt zur Anbringung auf einer Teilfuge des Gehäuses der Gasturbine aufweisen. Die U-förmige Geometrie der Drehvorrichtung ermöglicht nicht nur eine leichte Handhabung sondern auch eine gute Kontrolle der Kräfte, die zur Herbeiführung einer Drehbewegung aufgewendet werden müssen. Ebenso kann aufgrund der U-förmigen Geometrie eine leichte und vorteilhafte Anbringung der Drehvorrichtung im Ganzen über die Verbindungsabschnitte an den Teilfugen des Gehäuses der Gasturbine erreicht werden.

Gemäß einer Weiterbildung dieser Ausführungsform ist vorgesehen, dass im Bereich des Scheitels der im Wesentlichen U-förmigen Drehvorrichtung wenigstens ein erster Befestigungsabschnitt vorgesehen ist. Der Scheitel ist hierbei der im Wesentlichen höchste Punkt bei erfolgter Anbringung der Drehvorrichtung an den Gehäuseteilen der Gasturbine, so dass über diesen eine gleichmäßige Abstützung der Drehvorrichtung gegen die Teilfugen der Gehäuseteile gut erreicht werden kann. Zudem ist dieser Punkt gut erreichbar und fördert damit die Bedienfreundlichkeit der Drehvorrichtung.

Gemäß einer weiteren besonders bevorzugten Ausführungsform der erfindungsgemäßen Drehvorrichtung sind mindestens zwei erste Befestigungsabschnitte vorgesehen, die insbesondere dazu ausgebildet sind, einen Seilzug zu haltern und insbesondere als Augen, besonders bevorzugt als bewegliche Augen ausgebildet sind. Über die mindestens zwei ersten Befestigungsabschnitte können bspw. wenigstens zwei unterschiedliche Kraftübertragungsmittel bzw. Seilzüge mit der Drehvorrichtung verbunden werden, um in kontrollierter Weise an möglicherweise unterschiedlichen Orten bzw. zu unterschiedlichen Zeiten verschiedene Kräfte in das zu drehende Bauteil der Gasturbine einzuleiten. Hierdurch kann das zu drehende Bauteil abschnittsweise über vorbestimmte Winkelbereiche gedreht werden, wodurch eine hohe Kontrolle über den Drehvorgang erreicht werden kann. Ebenso kann die Drehsicherheit erhöht werden, da der Drehvorgang stets über ein Kraftübertragungsmittel, welches mit einem Befestigungsabschnitt verbunden ist, gesichert sein kann.

Gemäß einer besonders kostengünstigen und leicht bereitzustellenden Ausführungsform der Erfindung kann die Drehvorrichtung einen oder mehrere Stahlträger umfassen, welche insbesondere als Stahlträger einer Doppel-T-Querschnittsform ausgebildet sind. Solche Stahlträger werden typischerweise im Gerüst- bzw. Kranbau eingesetzt und sind leicht verfügbar. Ebenso eignen sich diese Stahlträger besonders zur sicheren Kraftübertragung in verschiedene Raumrichtungen.

Gemäß einer ersten besonders bevorzugten Ausführungsform des erfindungsgemäßen Verfahrens ist vorgesehen, dass das Drehen des Bauteils kraftgesteuert erfolgt. So kann bspw. das Kraftübertragungsmittel mit einem geeigneten Kraftmessgerät (z.B. Krafttrommel) zusammenarbeiten, um eine Kraftsteuerung zu gewährleisten. Die Kraftsteuerung ermöglicht eine hohe Kontrolle über den Drehvorgang, so dass sicher und effizient gearbeitet werden kann.

Gemäß einer weiteren besonders bevorzugten Ausführungsform des erfindungsgemäßen Verfahrens ist vorgesehen, dass das Drehen winkelgesteuert erfolgt, insbesondere durch mehrmaliges Ändern der Befestigung von erstem Befestigungsabschnitt und dem Kraftübertragungsmittel und jeweils nachfolgender Beaufschlagung des Kraftübertragungsmittels mit einer Kraft zum Drehen um einen vorgegebenen Winkelbereich. Alternativ können auch mehrere Kraftübertragungsmittel vorgesehen sein, welche gleichzeitig bzw. nacheinander entsprechend mit geeigneten Kräften beaufschlagt werden, die ein winkelgesteuertes Drehen des Bauteils zur Folge haben. Durch die Drehung über einen vorbestimmten Winkelbereich kann wiederum ein hoher Grad an Kontrolle über den Drehvorgang erreicht werden, der ein effizientes und sicheres Arbeiten ermöglicht.

Nachfolgend soll die Erfindung anhand von einzelnen Figuren im Detail beschrieben werden. Hierbei ist darauf hinzuweisen, dass die Figuren lediglich schematisch zu verstehen sind, und keine Einschränkung hinsichtlich der Ausführbarkeit der Erfindung erlauben.

Weiter sei darauf hingewiesen, dass Bauteile mit gleichen Bezugszeichen gleiche technische Wirkungsweisen haben.

Ebenso sei darauf hingewiesen, dass vorliegend die in den Figuren dargestellten technischen Merkmale in beliebiger Kombination miteinander beansprucht werden, soweit diese Kombination die der Erfindung zugrundeliegenden Aufgaben lösen kann.

Hierbei zeigen:
- Figur 1: eine erste Ausführungsform der erfindungsgemäßen Drehvorrichtung in perspektivischer seitlicher Darstellung in einem auf einem Gehäuseteil angebrachten Zustand;
- Figur 2: eine weitere Ausführungsform der erfindungsgemäßen Drehvorrichtung 1 in perspektivischer seitlicher Darstellung in einem auf einem Gehäuseteil angebrachten Zustand;
- Figur 3: eine vorliegend nicht beanspruchtes Verfahren in einer flussdiagrammatischen Darstellung;
- Figur 4: eine weitere Ausführungsform des erfindungsgemäßen Verfahrens in einer flussdiagrammatischen Darstellung.

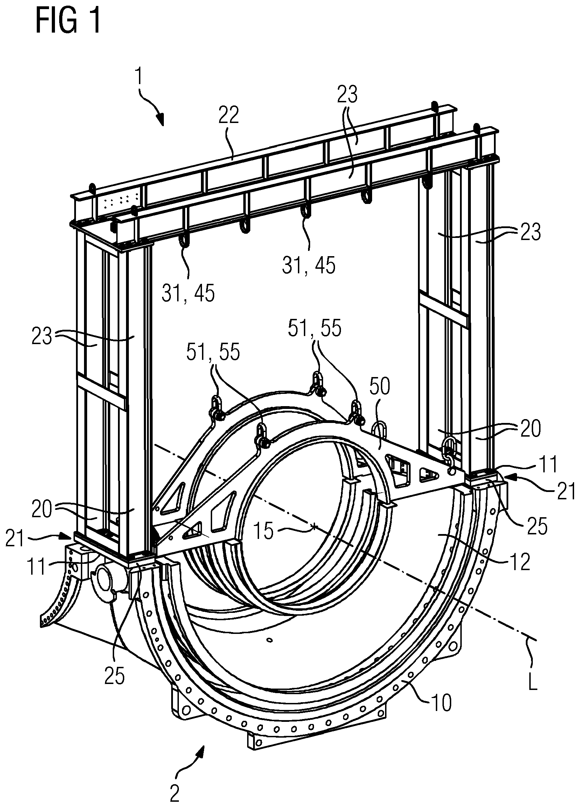

Figur 1 zeigt eine Drehvorrichtung 1, welche über einen Verbindungsabschnitt 21 mit einem Adapterstück 25 an einer Teilfuge 11 des Gehäuses 10 der Gasturbine 2 angebracht ist. Die Drehvorrichtung weist im Wesentlichen U-förmige Geometrie auf, und ist aus insgesamt sechs miteinander verschraubten bzw. verschweißten Stahlträgern ausgebildet. Das von der Gasturbine 2 dargestellte Gehäuseteil ist die untere Gehäusehälfte nach Entfernung der nicht weiter gezeigten oberen Hälfte des Gehäuses 10. In dieser unteren Hälfte des Gehäuses 10 befindet sich ebenfalls eine Hälfte eines Leitapparates 12 angeordnet, von welchem die obere Hälfte des Leitapparates 12 bereits abgenommen wurde (vorliegend nicht gezeigt). Die untere Hälfte des Gehäuses 10 sowie die untere Hälfte des Leitapparats 12 liegen im Wesentlichen unverdreht gegeneinander vor.

Um nun die Drehvorrichtung 1 mit dem unteren Teil des Gehäuses 10 zu verbinden, werden zweiseitig jeweils ein Verbindungsabschnitt 21 eines Endstücks 20 mit einer zugeordneten Teilfuge 11 des Gehäuses 10 kontaktiert und beide miteinander verschraubt. Im oberen Bereich des Scheitels 22 befinden sich darüber hinaus erste Befestigungsabschnitte 31 angeordnet, welche als Augen 45 ausgebildet sind. Die ersten Befestigungsabschnitte 31 sind hierbei so ausgeführt, dass sie mit einem Kraftübertragungsmittel 40 (vorliegend nicht gezeigt) in geeigneter Form zusammenwirken können. Hierbei erfolgt die Kraftabstützung über die von der Drehvorrichtung 1 umfassten Stahlträger 23 und die Krafteinleitung über die Teilfugen 11 in den unteren Teil des Gehäuses 10.

Entsprechend der vorliegend gezeigten Ausführungsform umfasst die Drehvorrichtung 1 weiterhin zwei Manschetten 50, welche im Wesentlichen gleich geformt sind. Die Manschetten 50 weisen hierbei einen kreisförmigen Aufnahmeabschnitt auf, in welchen der Gasturbinenläufer 15 (vorliegend nicht gezeigt) aufgenommen werden kann. Durch eine form- und kraftschlüssige Verbindung von Gasturbinenläufer 15 und den beiden Manschetten 50 kann vermittelt über die Manschetten 50 eine Kraftbeaufschlagung des Gasturbinenläufers 15 bewirkt werden. Hierzu weisen die beiden Manschetten 50 jeweils zwei zweite Befestigungsabschnitte auf, die ebenfalls als Augen 55 ausgeführt sind. Insbesondere sind die Augen 55 als Schäkel ausgebildet.

Die Manschetten 50 sind darüber hinaus mit jeweils zwei nicht weiter mit Bezugszeichen versehenen Abstützarmen versehen, welche sich gegen die Teilfugen des unteren Teils des Leitapparates 12 verspannen lassen bzw. verspannt sind. Insbesondere sind eine Verschraubung und/oder eine Verklammerung zur Herbeiführung dieser Verspannung denkbar. Dadurch kann eine geeignete Zentrierung der Manschetten 50 erreicht werden sowie eine gleichmäßige Drehbewegung von Gasturbinenläufer 15 und Leitapparat 12. Werden also die Manschetten 50 mit einer Kraft beaufschlagt, kommt es gleichzeitig zu einer Drehung des Gasturbinenläufers 15 wie auch zu einer Drehung des unteren Teils des Leitapparates 12.

Hierbei ist es im Normalfall erforderlich, dass die Drehung konzentrisch zu der Längsachse L des vorliegend nicht gezeigten Turbinenläufers 15 erfolgt. Insofern umfassen die Manschetten 50 den Gasturbinenläufer 15 konzentrisch.

Durch eine geeignete Kombination von Kraftübertragungen zwischen den ersten Befestigungsabschnitten 31 und den zweiten Befestigungsabschnitten 51 kann nun mittels eines Kraftübertragungsmittels eine Drehung vermittelt werden. Hierbei ist darauf zu achten, dass geeignete Hebel zur Vermittlung der Drehung ausgewählt werden. Dem Fachmann ist verständlich, dass bei Wahl eines größeren Hebels eine Drehung bei verhältnismäßig kleinerem Kraftaufwand erfolgen kann.

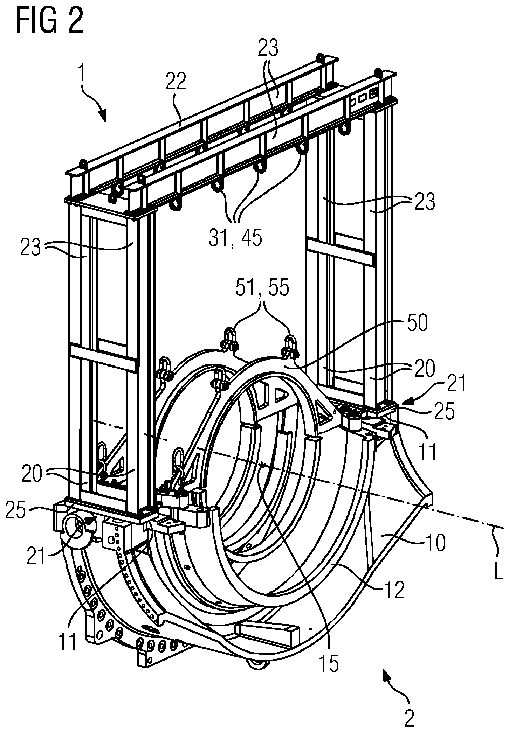

Figur 2 zeigt eine weitere Ausführungsform der erfindungsgemäßen Drehvorrichtung 1, welche sich von der in Figur 1 gezeigten Drehvorrichtung 1 im Wesentlichen dadurch unterscheidet, dass eine Vielzahl von ersten Befestigungsabschnitten 31 im Bereich des Scheitels 22 der Drehvorrichtung 1 vorgesehen sind. Durch die größere Anzahl an ersten Befestigungsabschnitten 31 kann so eine höhere Genauigkeit des Drehvorganges erreicht werden, indem mehr Kombinationen bereitstehen, die erlauben, mittels eines Kraftübertragungsmittels die ersten Befestigungsabschnitte 31 und die zweiten Befestigungsabschnitte 51 zu verbinden. Insbesondere erlaubt die Vielzahl an ersten Befestigungsabschnitten 31 eine im Wesentlichen gut winkelgesteuerte Drehung.

Dem Fachmann ist verständlich, dass sowohl eine beliebige Anzahl an ersten Befestigungsabschnitten 31 wie auch eine beliebige Anzahl an zweiten Befestigungsabschnitten 51 vorgesehen sein können. Insbesondere kann erfindungsgemäß auch auf das Vorsehen einer Manschette 50 verzichtet werden, wobei bspw. die Beaufschlagung des Leitapparates 12 mit einer Drehbewegung über weitere vorliegend nicht gezeigte zweite Befestigungsabschnitte 51 erfolgen kann, die an dem Leitapparat 12 angebracht sind bzw. in diesem vorgesehen sind.

An dieser Stelle sei auch darauf hingewiesen, dass als Kraftübertragungsmittel 40 alle für die Herbeiführung einer Drehbewegung geeigneten Kraftübertragungsmittel vorgesehen sein können. Im einfachsten Fall kann dies ein Seilzug sein. Der erfindungsgemäße Vorteil liegt darin, dass durch Vorsehen solcher leichter und kostengünstiger Kraftübertragungsmittel 40 der Einsatz von Mobilkränen oder auch Maschinenhauskränen vermieden werden kann.

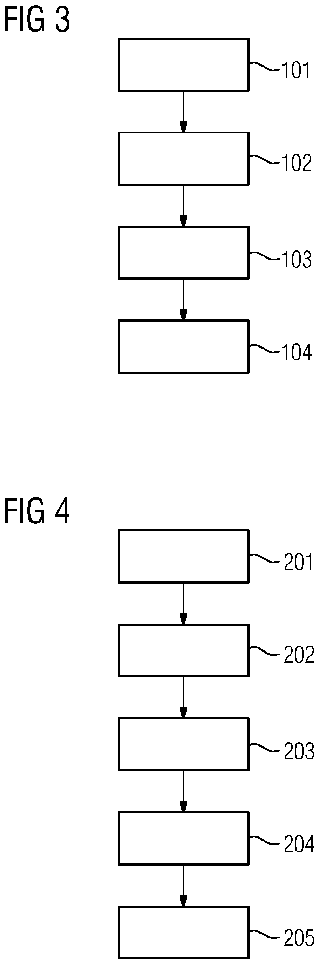

Figur 3 zeigt eine vorliegend nicht beanspruchte Ausführungsform eines Verfahrens zum Drehen eines Bauteils einer wenigstens teilweise geöffneten Gasturbine 2 mittels einer weiter oben beschriebenen Drehvorrichtung 1, wobei die folgenden Schritte umfasst sind:
- Anbringen wenigstens eines Verbindungsabschnitts 21 der Drehvorrichtung 1 auf einer Teilfuge 11 des Gehäuses 10 der Gasturbine 2 (erster Verfahrensschritt 101);
- Befestigen eines Kraftübertragungsmittels 40, insbesondere wenigstens eines Seilzugs 40 an dem Leitapparat 12 der Gasturbine 2 (zweiter Verfahrensschritt 102);
- Befestigen des Kraftübertragungsmittels 40 an dem wenigstens einen ersten Befestigungsabschnitt 31 der Drehvorrichtung 1 (dritter Verfahrensschritt 103);
- Beaufschlagen des Kraftübertragungsmittels 40 mit einer Kraft zum Drehen des Leitapparats 12 der Gasturbine 2 (vierter Verfahrensschritt 104).

Figur 4 zeigt eine erste Ausführungsform des erfindungsgemäßen Verfahrens zum Drehen eines Bauteils einer wenigstens teilweise geöffneten Gasturbine 2, wie oben beschrieben, mittels einer Drehvorrichtung 1, wie ebenfalls weiter oben beschrieben, wobei die folgenden Schritte umfasst sind:
- Anbringen wenigstens eines Verbindungsabschnitts 31 der Drehvorrichtung 1 auf einer Teilfuge 11 des Gehäuses 10 der Gasturbine 2 (erster Verfahrensschritt 201);
- Kraftschlüssiges Verbinden der Manschette 50 mit dem Gasturbinenläufer 15 der Gasturbine 2 (zweiter Verfahrensschritt 202);
- Befestigen eines Kraftübertragungsmittels 40, insbesondere wenigstens eines Seilzugs 40 an dem wenigstens einen zweiten Befestigungsabschnitt 51 der Manschette 50 (dritter Verfahrensschritt 203);
- Befestigen des Kraftübertragungsmittels 40 an dem wenigstens einen ersten Befestigungsabschnitt 31 (vierter Verfahrensschritt 204);
- Beaufschlagen des Kraftübertragungsmittels 40 mit einer Kraft zum Drehen des Gasturbinenläufers 15 (fünfter Verfahrensschritt 205).

Weitere Ausführungsformen ergeben sich aus den Unteransprüchen.

## Patentansprüche

1. Drehvorrichtung (1) für eine wenigstens teilweise geöffnete Gasturbine (2), welche dazu ausgebildet ist, auf einer Teilfuge (11) des Gehäuses (10) der wenigstens teilweise geöffneten Gasturbine (2) über wenigstens einen Verbindungsabschnitt (21) angebracht zu werden, wobei die Drehvorrichtung (1) wenigstens einen ersten Befestigungsabschnitt (31) aufweist, der dazu ausgebildet ist, mit einem Kraftübertragungsmittel (40), insbesondere wenigstens einem Seilzug (40) mechanisch zusammenzuwirken, um eine drehende Bewegung mindestens eines Bauteils der wenigstens teilweise geöffneten Gasturbine (2) mechanisch zu vermitteln
**dadurch gekennzeichnet, dass**
mindestens eine Manschette (50) umfasst ist, die wenigstens einen zweiten Befestigungsabschnitt (51) aufweist, wobei die Manschette (50) dazu ausgebildet ist, kraftschlüssig mit dem Gasturbinenläufer (15) verbunden zu werden.

2. Drehvorrichtung nach Anspruch 1,
**dadurch gekennzeichnet, dass**
die Drehvorrichtung (1) bei erfolgter Anbringung an dem Gehäuse (10) einen Gasturbinenläufer (15) der wenigstens teilweise geöffneten Gasturbine (2) teilweise umgibt.

3. Drehvorrichtung nach einem der vorhergehenden Ansprüche,
**dadurch gekennzeichnet, dass**
weiter wenigstens ein Adapterstück (25) umfasst ist, welches sowohl mit dem wenigstens einen Verbindungsabschnitt (21) mechanisch verbunden ist, als auch mit der Teilfuge (11) des Gehäuses (10) der Gasturbine (2) verbindbar ist.

4. Drehvorrichtung nach einem der vorhergehenden Ansprüche,
**dadurch gekennzeichnet, dass**
der wenigstens eine erste Befestigungsabschnitt (31) dazu ausgebildet ist, einen Seilzug (40) zu haltern, und insbesondere ein Auge (45), bevorzugt ein bewegliches Auge (45) aufweist.

5. Drehvorrichtung nach einem der vorhergehenden Ansprüche,
**dadurch gekennzeichnet, dass**
der wenigstens eine zweite Befestigungsabschnitt (51) dazu ausgebildet ist, einen Seilzug (40) zu haltern, und insbesondere ein Auge (55), bevorzugt ein bewegliches Auge (55) aufweist.

6. Drehvorrichtung nach einem der vorhergehenden Ansprüche,
**dadurch gekennzeichnet, dass**
die mindestens eine Manschette (50) wenigstens teilweise eine Umfangsform aufweist, welche der Umfangsform eines Leitapparats (12) nachgebildet ist.

7. Drehvorrichtung nach einem der vorhergehenden Ansprüche,
**dadurch gekennzeichnet, dass**
dass die Drehvorrichtung (1) eine im Wesentlichen U-förmige Geometrie aufweist, deren Endstücke (20) jeweils einen Verbindungsabschnitt (21) zur Anbringung auf einer Teilfuge (11) des Gehäuses (10) der Gasturbine (2) aufweisen.

8. Drehvorrichtung nach Anspruch 7,
**dadurch gekennzeichnet, dass**
im Bereich des Scheitels (22) der im Wesentlichen U-förmigen Drehvorrichtung (1) wenigstens ein erster Befestigungsabschnitt (31) vorgesehen ist.

9. Drehvorrichtung nach einem der vorhergehenden Ansprüche,
**dadurch gekennzeichnet, dass**
mindestens zwei erste Befestigungsabschnitte (31) vorgesehen sind, die insbesondere dazu ausgebildet sind, einen Seilzug (40) zu haltern, und insbesondere als Augen (45), bevorzugt als bewegliche Augen (45) ausgebildet sind.

10. Drehvorrichtung nach einem der vorhergehenden Ansprüche,
**dadurch gekennzeichnet, dass**
die Drehvorrichtung (1) einen oder mehrere Stahlträger (23) umfasst, insbesondere Stahlträger (23) einer Doppel-T-Querschnittsform.

11. Verfahren zum Drehen eines Bauteils einer wenigstens teilweise geöffneten Gasturbine (2) mittels einer Drehvorrichtung (1) gemäß einem der vorhergehenden Ansprüche, wobei die folgenden Schritte umfasst sind:
- Anbringen wenigstens eines Verbindungsabschnitts (31) der Drehvorrichtung (1) auf einer Teilfuge (11) des Gehäuses (10) der Gasturbine (2);
- Kraftschlüssiges Verbinden der Manschette (50) mit dem Gasturbinenläufer (15) der Gasturbine (2).
- Befestigen eines Kraftübertragungsmittels (40), insbesondere wenigstens eines Seilzugs (40) an dem wenigstens einen zweiten Befestigungsabschnitt (51) der Manschette (50) ;
- Befestigen des Kraftübertragungsmittels (40) an dem wenigstens einen ersten Befestigungsabschnitt (31);
- Beaufschlagen des Kraftübertragungsmittels (40) mit einer Kraft zum Drehen des Gasturbinenläufers (15);

12. Verfahren nach Anspruch 11,
**dadurch gekennzeichnet, dass**
das Drehen kraftgesteuert erfolgt.

13. Verfahren nach Anspruch 11 oder 12,
**dadurch gekennzeichnet, dass**
das Drehen winkelgesteuert erfolgt, insbesondere durch mehrmaliges Ändern der Befestigung von erstem Befestigungsabschnitt (31) und dem Kraftübertragungsmittel (40) und jeweils nachfolgender Beaufschlagen des Kraftübertragungsmittels (40) mit einer Kraft zum Drehen um einen vorgegebenen Winkelbereich.

## Claims

1. Rotating device (1) for an at least partially opened gas turbine (2), which is designed to be installed on a parting joint (11) of the casing (10) of the at least partially opened gas turbine (2) by means of at least one connection section (21), wherein the rotating device (1) has at least one first attachment section (31) which is designed to mechanically cooperate with a force-transmitting means (40), in particular at least one sheathed cable (40), in order to mechanically impart a rotational movement to at least one component of the at least partially opened gas turbine (2),
**characterized in that**
it comprises at least one collar (50) having at least one second attachment section (51), the collar (50) being designed to be connected in a force-fitting manner to the gas turbine rotor (15).

2. Rotating device according to Claim 1,
**characterized in that**
the rotating device (1), once installed on the casing (10), partially surrounds a gas turbine rotor (15) of the at least partially opened gas turbine (2).

3. Rotating device according to one of the preceding claims,
**characterized in that**
it further comprises at least one adapter piece (25) which can be mechanically connected both to the at least one connection section (21) and to the parting joint (11) of the casing (10) of the gas turbine (2).

4. Rotating device according to one of the preceding claims,
**characterized in that**
the at least one first attachment section (31) is designed to support a sheathed cable (40) and has in particular an eye (45), preferably a movable eye (45).

5. Rotating device according to one of the preceding claims,
**characterized in that**
the at least one second attachment section (51) is designed to support a sheathed cable (40) and has in particular an eye (55), preferably a movable eye (55).

6. Rotating device according to one of the preceding claims,
**characterized in that**
the at least one collar (50) has, at least in part, a circumferential shape which replicates the circumferential shape of a guide apparatus (12).

7. Rotating device according to one of the preceding claims,
**characterized in that**
the rotating device (1) is essentially U-shaped, its end pieces (20) each having a connection section (21) for installation on a parting joint (11) of the casing (10) of the gas turbine (2).

8. Rotating device according to Claim 7,
**characterized in that**
at least one first attachment section (31) is provided in the region of the apex (22) of the essentially U-shaped rotating device (1).

9. Rotating device according to one of the preceding claims,
**characterized in that**
there are provided at least two first attachment sections (31) which are in particular designed to support a sheathed cable (40) and are in particular designed as eyes (45), preferably as movable eyes (45).

10. Rotating device according to one of the preceding claims,
**characterized in that**
the rotating device (1) comprises one or more steel beams (23), in particular I-section steel beams (23).

11. Method for rotating a component of an at least partially opened gas turbine (2) by means of a rotating device (1) according to one of the preceding claims, comprising the following steps:
- installing at least one connection section (31) of the rotating device (1) on a parting joint (11) of the casing (10) of the gas turbine (2);
- connecting, in a force-fitting manner, the collar (50) to the gas turbine rotor (15) of the gas turbine (2);
- attaching a force-transmitting means (40), in particular at least one sheathed cable (40), to the at least one second attachment section (51) of the collar (50);
- attaching the force-transmitting means (40) to the at least one first attachment section (31);
- applying a force to the force-transmitting means (40) in order to rotate the gas turbine rotor (15).

12. Method according to Claim 11,
**characterized in that**
the rotation takes place on the basis of force control.

13. Method according to Claim 11 or 12,
**characterized in that**
the rotation takes place on the basis of angle control, in particular by means of multiple changes to the attachment between the first attachment section (31) and the force-transmitting means (40) and, in each case, subsequently applying a force to the force-transmitting means (40) in order to rotate through a predefined angular range.

## Revendications

1. Dispositif (1) de mise en rotation pour une turbine (2) à gaz ouverte au moins en partie, qui est constitué pour être mis sur une jonction (11) de la carcasse de la turbine (2) à gaz ouverte au moins en partie par au moins une partie (21) de liaison, le dispositif (1) de mise en rotation ayant au moins une première partie (31) de fixation constituée pour coopérer mécaniquement avec un moyen (40) d'application d'une force, notamment au moins une transmission (40) par câble, pour donner mécaniquement un mouvement tournant d'au moins un élément de la turbine (2) à gaz ouverte au moins en partie,
**caractérisé en ce que**
il comprend au moins une manchette (50), qui a au moins une deuxième partie (51) de fixation, la manchette (50) étant constituée pour être reliée à coopération de force au rotor (15) de la turbine à gaz.

2. Dispositif de mise en rotation suivant la revendication 1,
**caractérisé en ce que**
le dispositif (1) de mise en rotation entoure, au moins en partie, lorsque sa mise sur la carcasse (10) est effectuée, un rotor (15) de la turbine 2 ouverte au moins en partie.

3. Dispositif de mise en rotation suivant l'une des revendications précédentes,
**caractérisé en ce que**
il comprend, en outre, au moins une pièce (25) formant adaptateur, qui est reliée mécaniquement, qui tant est reliée mécaniquement à la au moins une partie (21) de liaison qu'également peut être reliée à la jonction de la carcasse (10) de la turbine (2) à gaz.

4. Dispositif de mise en rotation suivant l'une des revendications précédentes,
**caractérisé en ce que**
la au moins une première partie (31) de fixation est constituée pour maintenir une transmission (40) par câble et notamment un oeillet (45), de préférence un oeillet (45) mobile.

5. Dispositif de mise en rotation suivant l'une des revendications précédentes,
**caractérisé en ce que**
la au moins une deuxième partie (51) de fixation est constituée pour maintenir une transmission (40) par câble et notamment un oeillet (55), de préférence un oeillet (55) mobile.

6. Dispositif de mise en rotation suivant l'une des revendications précédentes,
**caractérisé en ce que**
la au moins une manchette (50), au moins en partie, une forme périphérique, qui reproduit la forme périphérique d'un appareil (13) de conduite.

7. Dispositif de mise en rotation suivant l'une des revendications précédentes,
**caractérisé en ce que**
le dispositif (1) de mise en rotation a une géométrie sensiblement en forme de U, dont les pièces (20) d'extrémité ont respectivement une partie (21) de liaison afin d'être mises sur une jonction (11) de la carcasse (10) de la turbine (2) à gaz.

8. Dispositif de mise en rotation suivant l'une des revendications précédentes,
**caractérisé en ce que**
dans la région du sommet (22) du dispositif (1) de mise en rotation sensiblement en forme de U, est prévue au moins une première partie (31) de fixation.

9. Dispositif de mise en rotation suivant l'une des revendications précédentes,
**caractérisé en ce que**
il est prévu au moins deux premières parties (31) de fixation constituées notamment pour maintenir une transmission (40) par câble et notamment sous forme d'oeillet (45), de préférence d'oeillet (45) mobile.

10. Dispositif de mise en rotation suivant l'une des revendications précédentes,
**caractérisé en ce que**
le dispositif (1) de mise en rotation comprend une ou plusieurs poutrelles (23) en acier, notamment des poutrelles (23) en acier ayant une forme de section transversale en double T.

11. Procédé pour faire tourner un élément d'une turbine (2) à gaz ouverte au moins en partie au moyen d'un dispositif (1) de mise en rotation suivant l'une des revendications précédentes, qui comprend les stades suivantes :
- mise d'au moins une partie (31) de liaison du dispositif (1) de mise en rotation sur une jonction (11) de la carcasse (10) de la turbine (2) à gaz ;
- liaison à coopération de force de la manchette (50) au rotor (15) de la turbine (2) à gaz ;
- fixation d'un moyen (40) d'application de force, notamment d'au moins une transmission (40) par câble à la au moins une deuxième partie (51) de fixation de la manchette (50) ;
- fixation du moyen (40) d'application de force à la au moins une première partie (31) de fixation ;
- soumission du moyen (40) d'application de force à une force pour faire tourner le rotor (15) de la turbine à gaz.

12. Procédé suivant la revendication 11,
**caractérisé en ce que**
la rotation s'effectue d'une façon servomotrice.

13. Procédé suivant la revendication 11 ou 12,
**caractérisé en ce que**
la rotation s'effectue d'une manière commandée angulairement, notamment en modifiant plusieurs fois la fixation de la première partie (31) de fixation et du moyen (40) d'application de force et en soumettant successivement le moyen (40) d'application de force à une force pour faire tourner d'une plage angulaire donnée à l'avance.
